# EUROPEAN PATENT APPLICATION

(11) **EP 4 708 544 A1**
(43) Date of publication of application: **11.03.2026**
(21) Application number: 24888950.3
(22) Date of filing: 11.10.2024
(51) Int. Cl.: H01M 50/507, H01M 50/502, H01M 50/264, H01M 50/593, H01M 50/211, H01M 50/251

(54) **BATTERY ASSEMBLY**

(30) Priority: 08.11.2023 KR 20230154001
(71) Applicant: LG Energy Solution, Ltd., Seoul 07335 (KR)
(72) Inventor: JO, Sang-Hyun, Daejeon 34122 (KR); LEE, Jeong-Won, Daejeon 34122 (KR); JEONG, Chan-Young, Daejeon 34122 (KR)
(74) Representative: Plasseraud IP
(86) International application number: PCT/KR2024/015415
(87) International publication number: WO 2025/100756

(57) **Abstract**

Disclosed is a battery assembly. The battery assembly includes a case providing an inner space; a first battery array accommodated inside the case and including a plurality of battery cells stacked in a left and right direction; a second battery array accommodated inside the case and including a plurality of battery cells stacked in the left and right direction, the second battery array being stacked with the first battery array in the left and right direction; a first bus bar electrically connected to a front side of the first battery array and electrically insulated from the second battery array; and a second bus bar electrically connected to a front side of the second battery array and electrically insulated from the first battery array.

## Description

### TECHNICAL FIELD

The present disclosure relates to a battery assembly.

This application is based on and claims priority from Korean Patent Application No. 10-2023-0154001, filed on November 8, 2023, with the Korean Intellectual Property Office, the disclosure of which is incorporated herein in its entirety by reference.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Recently, as issues such as power shortage and eco-friendly energy have come to the fore, an energy storage system (ESS) for storing generated power is receiving more attention. For example, a smart grid system has been proposed as one of the methods for controlling power supply and demand. The amount of power consumed by consumers is not always constant and may fluctuate frequently. A representative example is that power consumption increases rapidly in the afternoon in summer due to the use of air conditioners and then decreases rapidly at night. In terms of consuming power, power consumption is not constant and may fluctuate frequently, but in terms of supplying power, it is realistically difficult to match such power consumption even if power production is controlled to some extent. Therefore, such imbalance in power supply and consumption may cause power oversupply or power shortage, and a smart grid system may flexibly store and control power to solve such problems. A smart grid system is a concept that stores electricity at a point of time or in an area at which there is a surplus of electricity, and supplies the stored electricity at a point of time or in an area at which there is a shortage of electricity. One of the key components for building such a smart grid system is the energy storage system for storing electricity. In addition, as electric vehicles have become commercialized in earnest, energy storage systems may also be utilized in facilities for charging electric vehicles, such as charging stations.

Such an energy storage system may include a plurality of battery packs or battery assemblies. In order to reduce the weight of the energy storage system and increase the energy density, it is necessary to simplify the structure of the battery assembly. In addition, a structure that may increase the expandability by easily connecting a plurality of battery assemblies is required.

### DISCLOSURE

### Technical Problem

The present disclosure is designed to solve these and other problems.

The present disclosure is directed to providing a battery assembly in which a plurality of battery cells are stably fixed.

The present disclosure is also directed to providing a battery assembly with a reduced number of parts and a simplified structure.

The present disclosure is also directed to providing a battery assembly with improved energy density.

The present disclosure is also directed to providing a battery assembly with improved scalability.

### Technical Solution

In one aspect of the present disclosure, there is provided a battery assembly comprising: a case providing an inner space; a first battery array accommodated inside the case and including a plurality of battery cells stacked in a left and right direction; a second battery array accommodated inside the case and including a plurality of battery cells stacked in the left and right direction, the second battery array being stacked with the first battery array in the left and right direction; a first bus bar electrically connected to a front side of the first battery array and electrically insulated from the second battery array; and a second bus bar electrically connected to a front side of the second battery array and electrically insulated from the first battery array.

In addition, the number of battery cells in the first battery array may be identical to the number of battery cells in the second battery array.

In addition, the battery assembly may further comprise a front bus bar frame extending in the left and right direction so that the first bus bar and the second bus bar are installed thereto.

In addition, the case may include a base plate; a first side wall coupled to an upper surface of the base plate and extending in a front and rear direction; and a second side wall coupled to the upper surface of the base plate and extending in the front and rear direction, the second side wall being spaced apart from the first side wall, and the first battery array and the second battery array may be accommodated between the first side wall and the second side wall.

In addition, the first side wall and the second side wall may pressurize the first battery array and the second battery array.

In addition, one side of the front bus bar frame may be fastened to the first side wall.

In addition, the battery assembly may further comprise a fixing bar positioned above the first battery array and the second battery array and extending in the left and right direction, the fixing bar having one side coupled to the first side wall and the other side coupled to the second side wall.

In addition, the battery assembly may further comprise a third bus bar electrically connected to a rear side of the first battery array and electrically insulated from the second battery array; and a fourth bus bar electrically connected to a rear side of the second battery array and electrically insulated from the first battery array.

In addition, the battery assembly may further comprise a third battery array positioned at the rear side of the first battery array and including a plurality of battery cells stacked in the left and right direction; a fifth bus bar electrically connected to a front side of the third battery array; and an inter bus bar configured to electrically connect the third bus bar and the fifth bus bar.

In addition, the battery assembly may further comprise a rear bus bar frame extending in the left and right direction so that the third bus bar and the fourth bus bar are installed thereto.

In addition, the battery assembly may further comprise a first insulation pad positioned between the first battery array and the second battery array.

In addition, the first battery array may further include a second insulation pad positioned between the plurality of battery cells.

A battery rack according to one aspect of the present disclosure comprises the battery assembly of the present disclosure.

An energy storage system according to another aspect of the present disclosure may include the battery assembly of the present disclosure.

### Advantageous Effects

According to at least one of the embodiments of the present disclosure, a plurality of battery cells may be stably fixed.

According to at least one of the embodiments of the present disclosure, the battery assembly may have a reduced number of parts and a simplified structure.

According to at least one of the embodiments of the present disclosure, the battery assembly may have improved energy density.

According to at least one of the embodiments of the present disclosure, the battery assembly may have improved expandability.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery assembly according to an embodiment of the present disclosure.
FIG. 2 is a drawing showing the battery assembly of FIG. 1, in which some components are exploded.
FIG. 3 is a drawing showing a battery array of the battery assembly of FIG. 2.
FIG. 4 is a drawing showing some components of the battery assembly of FIG. 1.
FIG. 5 is a drawing showing some components and the battery array of the battery assembly of FIG. 4.
FIGS. 6 and 7 are drawings showing some components of the battery assembly of FIG. 5 and a front bus bar frame assembly.
FIGS. 8 and 9 are drawings showing some components of the battery assembly of FIG. 7 and a rear bus bar frame assembly.
FIGS. 10 and 11 are drawings showing some components of the battery assembly of FIG. 9 and a fixing bar.
FIG. 12 is a cross-sectional view, taken along the cutting line A-A' of FIG. 11.
FIG. 13 is an enlarged drawing showing a part B of FIG. 12.
FIG. 14 is an enlarged drawing showing a part C of FIG. 12.
FIG. 15 is an enlarged drawing showing a part D of FIG. 12.
FIG. 16 is an enlarged drawing showing a part E of FIG. 12.
FIG. 17 is a drawing showing some components and a battery array of the battery assembly of FIG. 12.
FIG. 18 is a drawing showing some components and a bracket of the battery assembly of FIG. 17.
FIG. 19 is an enlarged drawing showing a part F of FIG. 18.
FIG. 20 is an enlarged drawing showing a part G of FIG. 18.
FIG. 21 is an enlarged drawing showing a part H of FIG. 18.
FIGS. 22 and 23 are drawings showing some components of the battery assembly of FIG. 18 and an inter bus bar.
FIG. 24 is a drawing showing some components of the battery assembly of FIG. 23 and a terminal bus bar and a control board.
FIG. 25 is a drawing showing some components of the battery assembly of FIG. 24 and a top cover.
FIG. 26 is a drawing showing an example of the electrode connection of the first battery array and the second battery array.
FIG. 27 is a drawing showing an example of the electrode connection of the first to fourth battery arrays.
FIG. 28 is a drawing showing an example of the electrode connection of the first to sixth battery arrays.
FIG. 29 is a drawing showing an example of the electrode connection of the first to eighth battery arrays.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

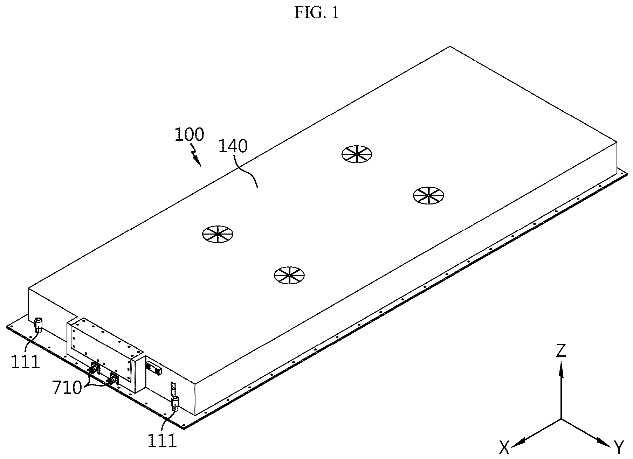

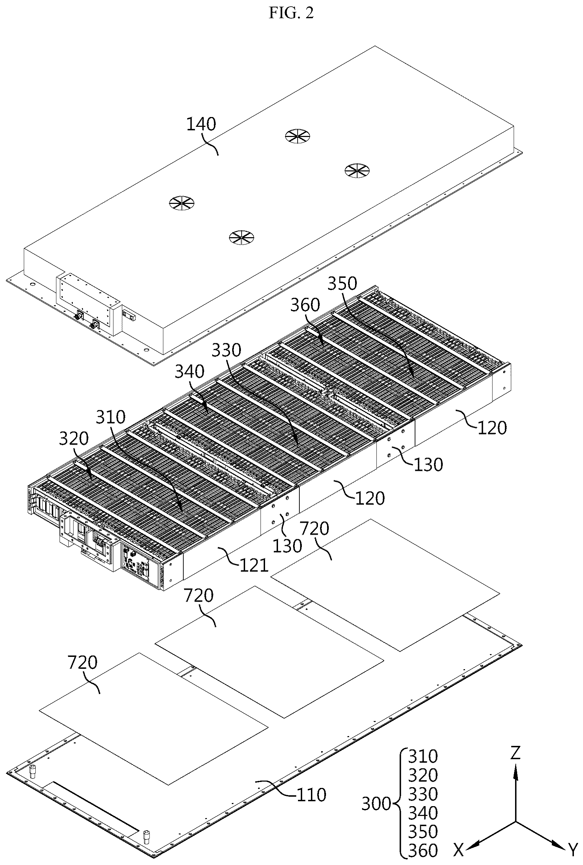

FIG. 1 is a drawing showing a battery assembly according to an embodiment of the present disclosure. FIG. 2 is a drawing showing the battery assembly of FIG. 1, in which some components are exploded. Referring to FIGS. 1 and 2, the battery assembly according to an embodiment of the present disclosure may include a case 100, a first battery array 310, a second battery array 320, a first bus bar 512, and a second bus bar 513.

The case 100 may have a rectangular parallelepiped shape. The case 100 may provide a space therein. Also, the case 100 may form the outer appearance of the battery assembly.

The first battery array 310 may include a plurality of battery cells 200. At this time, the battery cell 200 may mean a secondary battery. In addition, the battery cell 200 may be a secondary battery having a pouch shape. The battery cell 200 may extend in the front and rear direction or the X-axis direction. The plurality of battery cells 200 may be stacked in the left and right direction or the Y-axis direction. The first battery array 310 may be accommodated inside the case 100.

The second battery array 320 may include a plurality of battery cells 200. The plurality of battery cells 200 may be stacked in the left and right direction or the Y-axis direction. The second battery array 320 may be accommodated inside the case 100. The first battery array 310 and the second battery array 320 may be stacked in the left and right direction or the Y-axis direction. Alternatively, the second battery array 320 may be positioned at one side of the first battery array 310. The first battery array 310 and the second battery array 320 may be collectively referred to as a battery array 300.

The first bus bar 512 may be electrically connected to the front side of the first battery array 310. The first bus bar 512 may include a plurality of parts.

The second bus bar 513 may be electrically connected to the front side of the second battery array 320. The second bus bar 513 may include a plurality of parts. The first bus bar 512 and the second bus bar 513 may be electrically insulated. The second bus bar 513 may be positioned at one side of the first bus bar 512. Alternatively, the first bus bar 512 and the second bus bar 513 may be arranged along the left and right direction or the Y-axis direction.

According to this configuration of the present disclosure, the first battery array 310 and the second battery array 320 may be electrically separated. Accordingly, when a plurality of battery assemblies are provided, the plurality of battery assemblies may be arranged in the front and rear direction or the Z-axis direction. At this time, the first battery array 310 and the second battery array 320 may be electrically connected to the battery array 300 of the adjacent battery assembly, respectively. Accordingly, the battery assembly may be configured to be expandable in the front and rear direction or the Z-axis direction.

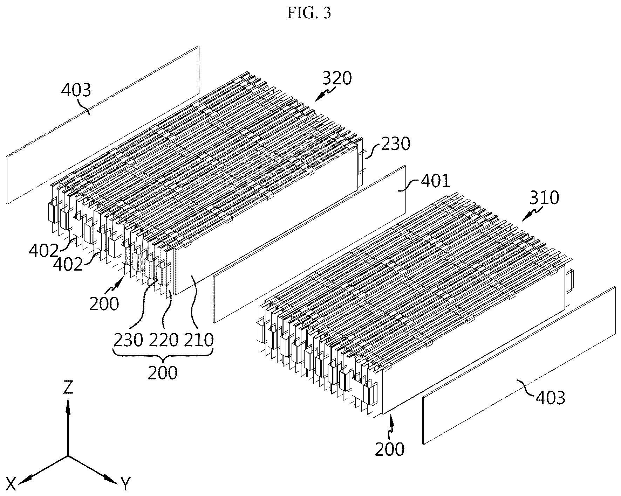

FIG. 3 is a drawing showing a battery array 300 of the battery assembly of FIG. 2. Referring to FIGS. 1 to 3, the battery assembly may include a first insulation pad 401. The first insulation pad 401 may be positioned between the first battery array 310 and the second battery array 320. The first insulation pad 401 may have a flat plate shape. The first insulation pad 401 may be elastic. In addition, the first insulation pad 401 may be electrically insulating. For example, the first insulation pad 401 may contain a silicone material. In addition, the first insulation pad 401 may extend in the front and rear direction or the X-axis direction.

The battery cell 200 may include an accommodation portion 210 accommodating an electrode assembly and a sealing portion 220 extending forward from the accommodation portion 210. Also, the battery cell may include an electrode lead 230 protruding forward from the accommodation portion 210 or the sealing portion 220.

According to this configuration of the present disclosure, the electrical safety of the battery assembly may be improved. The first battery array 310 and the second battery array 320 may be stably insulated.

Referring to FIGS. 1 to 3, the battery assembly may include a second insulation pad 402. The second insulation pad 402 may be positioned between the plurality of battery cells 200 of the first battery array 310. The second insulation pad 402 may be substantially the same component as the first insulation pad 401. The first battery array 310 may include a plurality of second insulation pads 402.

Also, the second insulation pad 402 may be positioned between the plurality of battery cells 200 of the second battery array 320. The second battery array 320 may include a plurality of second insulation pads 402.

In addition, the third insulation pad 403 may be provided at the right side of the first battery array 310. Also, the third insulation pad 403 may be provided at the left side of the second battery array 320. The first to third insulation pads 401 to 403 may be substantially the same component.

According to this configuration of the present disclosure, the electrical safety of the battery assembly may be improved. The first battery array 310 and the second battery array 320 may be stably insulated, respectively.

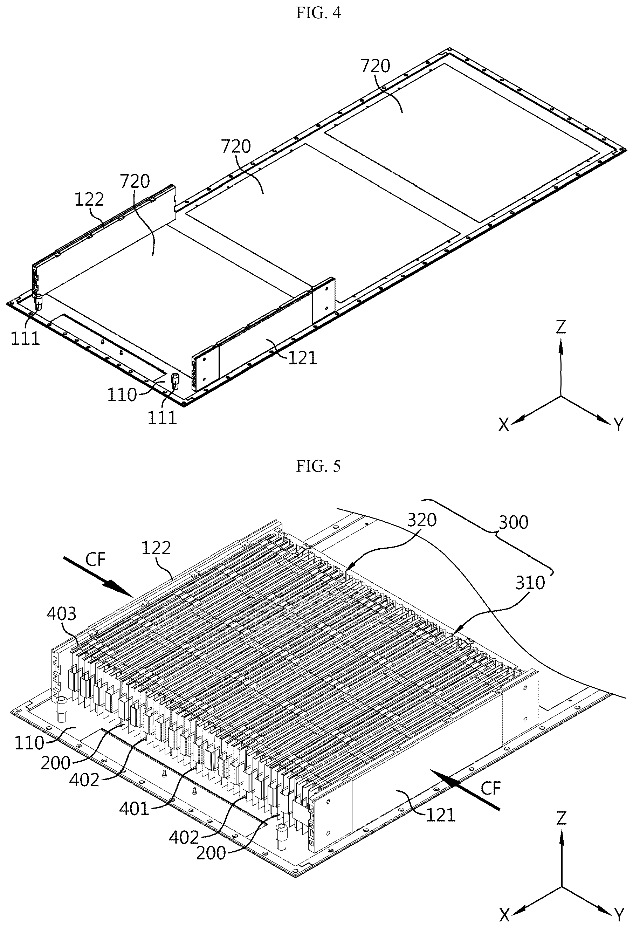

FIG. 4 is a drawing showing some components of the battery assembly of FIG. 1. FIG. 5 is a drawing showing some components and the battery array 300 of the battery assembly of FIG. 4. Referring to FIGS. 4 and 5, the case 100 of the battery assembly may include a base plate 110, a first side wall 121, and a second side wall 122.

The base plate 110 may have a rectangular shape. The base plate 110 may form the outer appearance of the battery assembly. The base plate 110 may have a cooling path therein. The cooling path may be formed along the front and rear direction or the X-axis direction. A cooling fluid may flow along the cooling path. In addition, the base plate 110 may have a pair of ports 111 that function inlet and outlet passages for the cooling fluid. The base plate 110 may also be referred to as a heatsink.

The first side wall 121 may be coupled, fastened, attached or fixed to the upper surface of the base plate 110. The first side wall 121 may extend along the front and rear direction or the X-axis direction. The first side wall 121 may form the outer appearance of the battery assembly.

The second side wall 122 may be coupled, fastened, attached, or fixed to the upper surface of the base plate 110. The second side wall 122 may extend along the front and rear direction or the X-axis direction. The second side wall 122 may be spaced apart from the first side wall 121 in the left and right direction or the Y-axis direction. Also, the first side wall 121 and the second side wall 122 may be opposite to each other. Alternatively, the first side wall 121 and the second side wall 122 may face each other. The second side wall 122 may form the outer appearance of the battery assembly.

The first battery array 310 and the second battery array 320 may be accommodated between the first side wall 121 and the second side wall 122. Also, the first battery array 310 and the second battery array 320 may be fixed between the first side wall 121 and the second side wall 122. The first side wall 121 and the second side wall 122 may provide a compressive force to compress the first battery array 310 and the second battery array 320 in the left and right direction.

A heat transfer member 720 may be positioned between the first battery array 310 and the base plate 110. Also, the heat transfer member 720 may be positioned between the second battery array 320 and the base plate 110. The heat transfer member 720 may contain a material having high thermal conductivity. The heat transfer member 720 may transfer heat generated from the first battery array 310 and the second battery array 320 to the base plate 110.

According to this configuration of the present disclosure, the first battery array 310 and the second battery array 320 may be stably fixed. Since the first side wall 121 and the second side wall 122 forming the outer appearance of the battery assembly fix the first battery array 310 and the second battery array 320, the number of parts of the battery assembly may be reduced and the structure may be simplified.

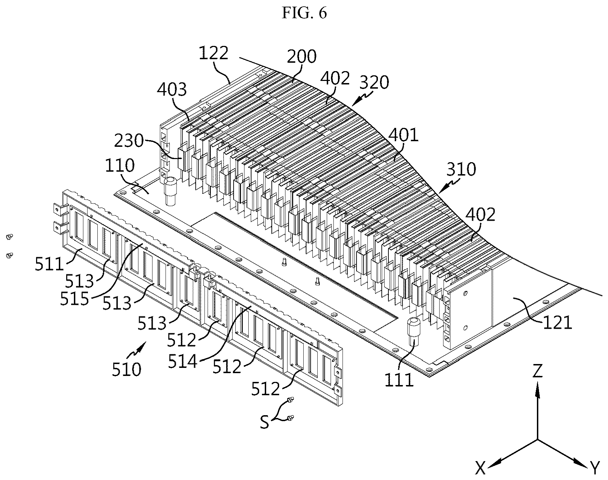

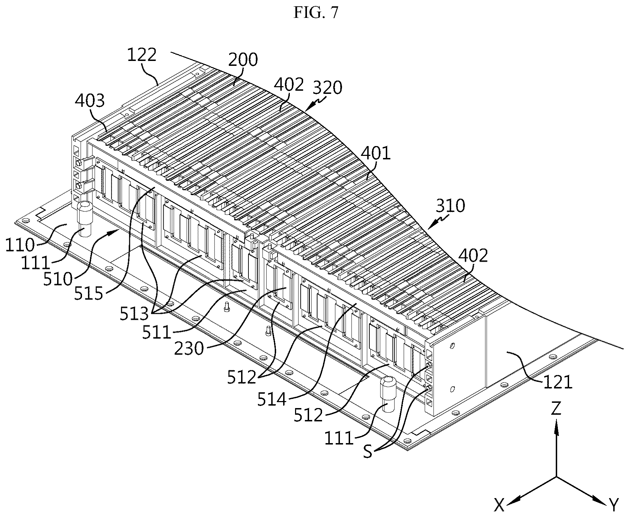

FIGS. 6 and 7 are drawings showing some components of the battery assembly of FIG. 5 and a front bus bar frame assembly 510. Referring to FIGS. 6 and 7, the battery assembly according to an embodiment of the present disclosure may include a front bus bar frame 511. The front bus bar frame 511 may extend along the left and right direction or the Y-axis direction. The first bus bar 512 and the second bus bar 513 may be installed, fixed, mounted, coupled, fastened or attached to the front bus bar frame 511. The front bus bar frame 511 may cover the front side of the accommodation portion 210 of the plurality of battery cells 200. Alternatively, the front bus bar frame 511 may cover the front side of the plurality of accommodation portions 210 of the first battery array 310. Alternatively, the front bus bar frame 511 may cover the front side of the plurality of accommodation portions 210 of the second battery array 320.

The inter connect board (ICB) 514, 515 may be provided in plurality. The first inter connect board 514 may be electrically connected to the first bus bar 512. In addition, the second inter connect board 515 may be electrically connected to the second bus bar 513.

According to this configuration of the present disclosure, the structure of the battery assembly may be simplified by installing the first bus bar 512 and the second bus bar 513, which are electrically separated, on one front bus bar frame 511. In addition, since the number of parts in the battery assembly is reduced, productivity may be improved. In addition, since the number of parts in the battery assembly is reduced, energy density may be improved.

Referring to FIGS. 6 and 7, one side of the front bus bar frame 511 according to an embodiment of the present disclosure may be fastened to the first side wall 121. A fastening member S may fasten one side of the front bus bar frame 511 to the first side wall 121. In addition, the other side of the front bus bar frame 511 may be fastened to the second side wall 122. The fastening member S may fasten the other side of the front bus bar frame 511 to the second side wall 122.

According to this configuration of the present disclosure, the front bus bar frame 511 may be installed and fixed by being fastened to the first side wall 121 and the second side wall 122. This may simplify the structure of the battery assembly.

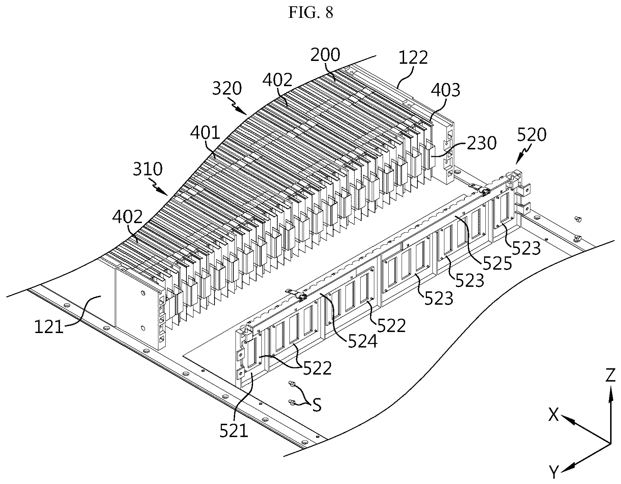

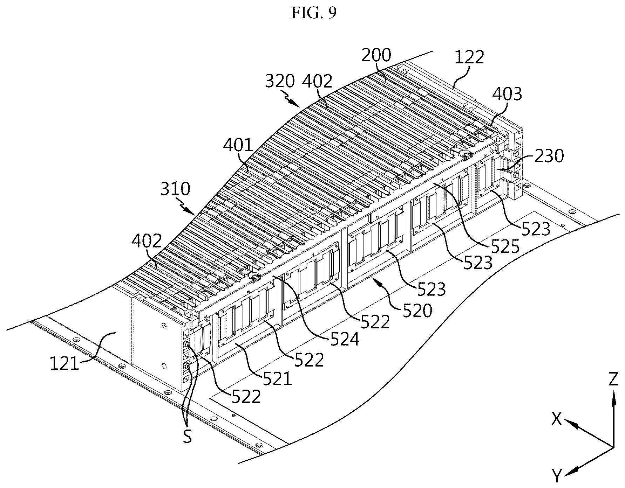

FIGS. 8 and 9 are drawings showing some components of the battery assembly of FIG. 7 and a rear bus bar frame assembly 521. Referring to FIGS. 8 and 9, the battery assembly according to an embodiment of the present disclosure may include a rear bus bar frame 521. The rear bus bar frame 521 may have a structure very similar to the front bus bar frame 511. The rear bus bar frame 521 may extend along the left and right direction or the Y-axis direction. A second bus bar 513 and a third bus bar 522 may be installed, fixed, mounted, coupled, fastened or attached to the rear bus bar frame 521. The rear bus bar frame 521 may cover the rear side of the accommodation portion 210 of the plurality of battery cells 200. Alternatively, the rear bus bar frame 521 may cover the rear side of the plurality of accommodation portions 210 of the first battery array 310. Alternatively, the rear bus bar frame 521 may cover the rear side of the plurality of accommodation portions 210 of the second battery array 320.

According to this configuration of the present disclosure, the structure of the battery assembly may be simplified by installing the third bus bar 522 and the fourth bus bar 523, which are electrically separated, on one rear bus bar frame 521. In addition, since the number of parts in the battery assembly is reduced, productivity may be improved. In addition, since the number of parts in the battery assembly is reduced, energy density may be improved.

Referring to FIGS. 8 and 9, one side of the rear bus bar frame 521 according to an embodiment of the present disclosure may be fastened to the first side wall 121. A fastening member S may fasten one side of the rear bus bar frame 521 to the first side wall 121. In addition, the other side of the rear bus bar frame 521 may be fastened to the second side wall 122. The fastening member S may fasten the other side of the rear bus bar frame 521 to the second side wall 122.

The inter connect board 524, 525 may be provided in plurality. The first inter connect board 524 may be electrically connected to the third bus bar 522. Also, the second inter connect board 525 may be electrically connected to the fourth bus bar 523.

According to this configuration of the present disclosure, the rear bus bar frame 521 may be installed and fixed by being fastened to the first side wall 121 and the second side wall 122. This may simplify the structure of the battery assembly.

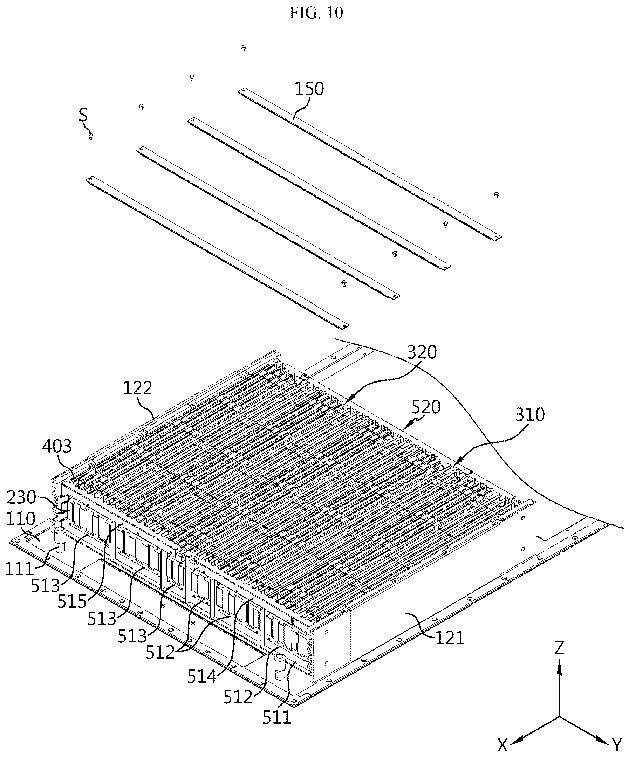

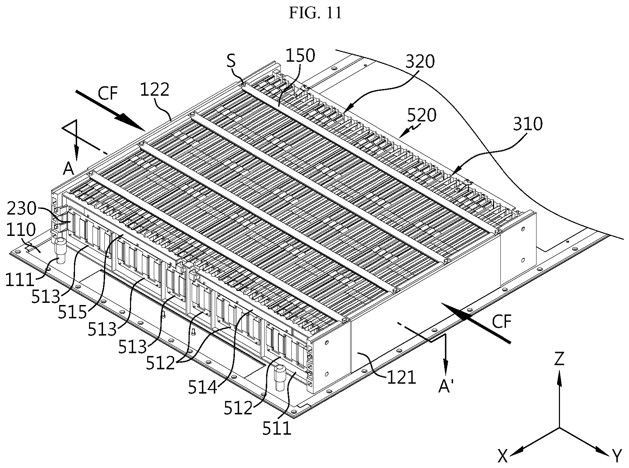

FIGS. 10 and 11 are drawings showing some components of the battery assembly of FIG. 9 and a fixing bar 150. Referring to FIGS. 10 and 11, the first side wall 121 and the second side wall 122 of the battery assembly according to an embodiment of the present disclosure may pressurize the first battery array 310 and the second battery array 320. The first side wall 121 and the second side wall 122 may apply a compressive force to compress the first battery array 310 and the second battery array 320 in the left and right direction or the Y-axis direction.

In addition, the front bus bar frame 511 may pressurize the first battery array 310 and the second battery array 320 by being fastened to the first side wall 121 and the second side wall 122. In addition, the rear bus bar frame 521 may pressurize the first battery array 310 and the second battery array 320 by being fastened to the first side wall 121 and the second side wall 122.

According to this configuration of the present disclosure, the first battery array 310 and the second battery array 320 may be stably fixed.

Referring to FIGS. 10 and 11, the battery assembly according to an embodiment of the present disclosure may include a fixing bar 150. The fixing bar 150 may be positioned above the first battery array 310 and the second battery array 320. The fixing bar 150 may extend along the left and right direction or the Y-axis direction. The fixing bar 150 may be provided in plurality. The plurality of fixing bars 150 may be arranged along the front and rear direction or the X-axis direction. The plurality of fixing bars 150 may form the outer appearance of the battery assembly.

One side of the fixing bar 150 may be fastened, coupled, fixed or attached to the first side wall 121. The fastening member S may fasten one side of the fixing bar 150 to the first side wall 121. In addition, the other side of the fixing bar 150 may be fastened, coupled, fixed or attached to the second side wall 122. The fastening member S may fasten the other side of the fixing bar 150 to the second side wall 122.

According to this configuration of the present disclosure, the fixing bar 150 may pressurize the first battery array 310 and the second battery array 320. The fixing bar 150 may apply a compressive force to compress the first battery array 310 and the second battery array 320 in the left and right direction or the Y-axis direction.

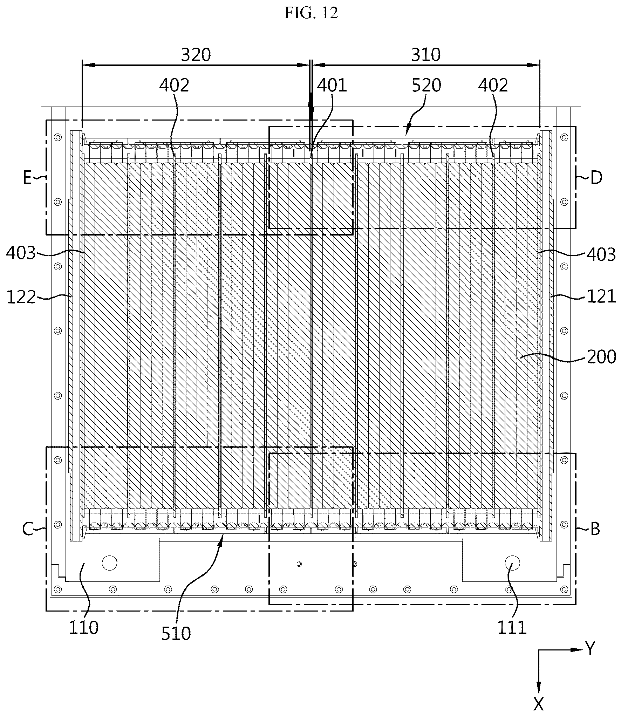

FIG. 12 is a cross-sectional view, taken along the cutting line A-A' of FIG. 11. Referring to FIG. 12, the number of battery cells 200 of the first battery array 310 and the number of battery cells 200 of the second battery array 320 of the battery assembly according to an embodiment of the present disclosure may be the same. For example, the first battery array 310 and the second battery array 320 may include 20 battery cells 200, respectively. In addition, the first battery array 310 and the second battery array 320 may include 4 second insulation pads 402, respectively. In addition, the first battery array 310 may include a third insulation pad 403 at the rightmost position. In addition, the second battery array 320 may include a third insulation pad 403 at the leftmost position. In addition, the first insulation pad 401 may be included between the first battery array 310 and the second battery array 320.

According to this configuration of the present disclosure, since the number of the first battery array 310 and the second battery array 320 are the same, expandability may be improved. For example, when a plurality of battery assemblies are electrically connected, electrical expandability may be easily implemented.

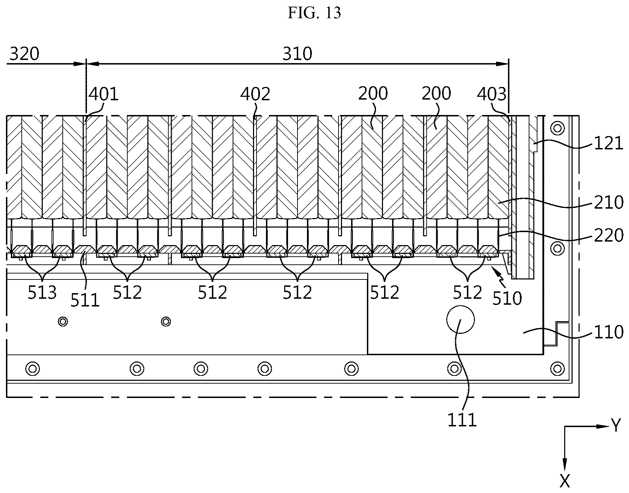

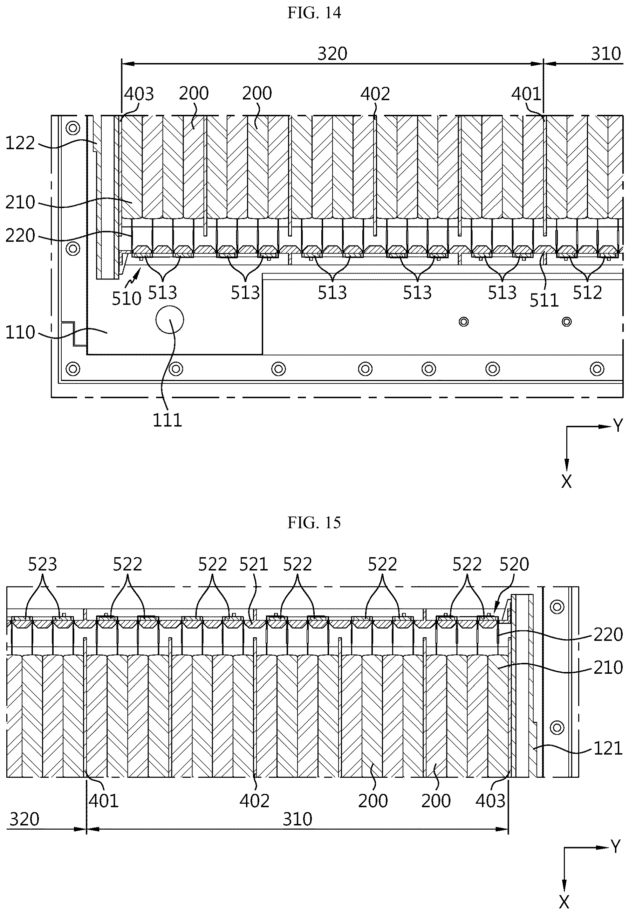

FIG. 13 is an enlarged drawing showing a part B of FIG. 12. FIG. 14 is an enlarged drawing showing a part C of FIG. 12. Referring to FIGS. 13 and 14, the plurality of battery cells 200 of the first battery array 310 may be electrically connected to the first bus bar 512. Also, the plurality of battery cells 200 of the second battery array 320 may be electrically connected to the second bus bar 513. The first bus bar 512 and the second bus bar 513 may be electrically separated or insulated. In addition, the first bus bar 512 may be electrically separated or insulated from the second battery array 320. Also, the second bus bar 513 may be electrically separated or insulated from the first battery array 300.

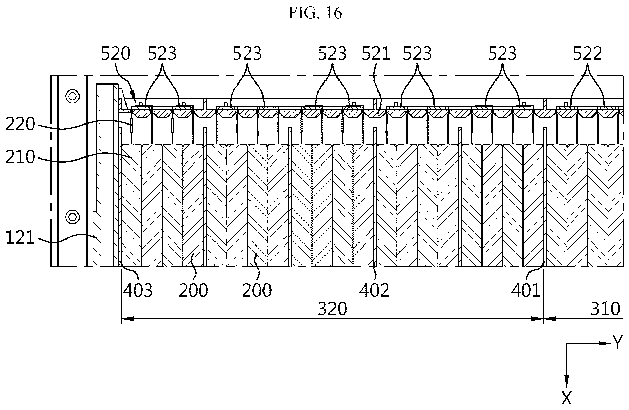

FIG. 15 is an enlarged drawing showing a part D of FIG. 12. FIG. 16 is an enlarged drawing showing a part E of FIG. 12. Referring to FIGS. 15 and 16, the plurality of battery cells 200 of the first battery array 310 may be electrically connected to the third bus bar 522. The third bus bar 522 may be electrically connected to the rear side of the first battery array 310. The first battery array 310 may be electrically connected to the first bus bar 512 and the third bus bar 522. The third bus bar 522 may be electrically separated or insulated from the second battery array 320.

The plurality of battery cells 200 of the second battery array 320 may be electrically connected to the fourth bus bar 523. The fourth bus bar 523 may be electrically connected to the rear side of the second battery array 320. The second battery array 320 may be electrically connected to the second bus bar 513 and the fourth bus bar 523. The fourth bus bar 523 may be electrically separated or insulated from the first battery array 310.

According to this configuration of the present disclosure, the first battery array 310 and the second battery array 320 may be electrically connected to the front side by one front bus bar frame 511, and may be electrically connected to the rear side by one rear bus bar frame 521. As a result, the structure of the battery assembly may be simplified while improving electrical expandability.

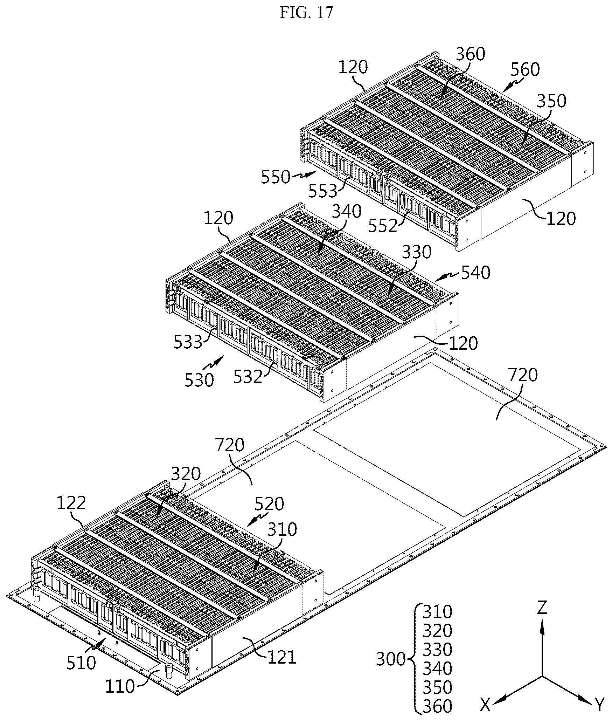

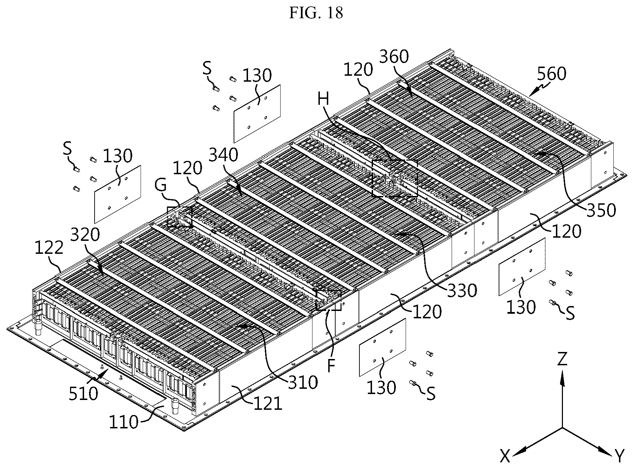

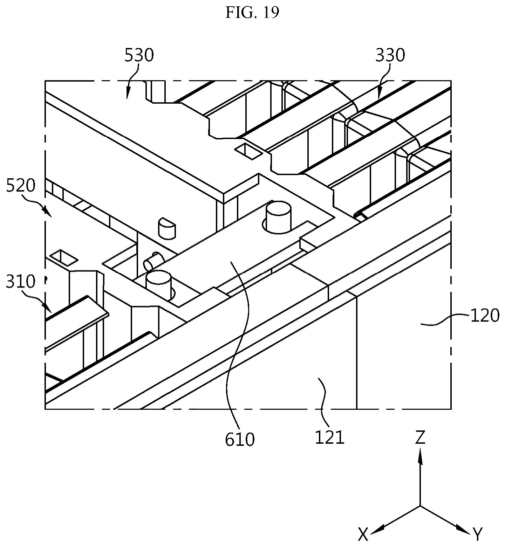

FIG. 17 is a drawing showing some components and a battery array 300 of the battery assembly of FIG. 12. FIG. 18 is a drawing showing some components and a bracket 130 of the battery assembly of FIG. 17. FIG. 19 is an enlarged drawing showing a part F of FIG. 18.

Referring to FIGS. 17 to 19, the battery assembly according to an embodiment of the present disclosure may include a third battery array 330 and a fourth battery array 340. The third battery array 330 and the fourth battery array 340 may have substantially the same configuration as the first battery array 310 and the second battery array 320.

The third battery array 330 may be positioned at the rear side of the first battery array 310. The third battery array 330 may include a plurality of battery cells 200 stacked in the left and right direction. The fourth battery array 340 may be positioned at the rear side of the second battery array 320.

The fifth bus bar 532 may be electrically connected to the front side of the third battery array 330. The sixth bus bar 533 may be electrically connected to the front side of the fourth battery array 340. The front bus bar frame assembly 530 may have substantially the same configuration and structure as the rear bus bar frame assembly 520. The front bus bar frame assembly 530 and the rear bus bar frame assembly 520 may be arranged to face each other.

The first inter bus bar 610 may be provided in plurality. The first inter bus bar 610 may electrically connect the first battery array 310 and the third battery array 330. Alternatively, the first inter bus bar 610 may electrically connect the rear bus bar frame assembly 520 and the front bus bar frame assembly 530.

According to this configuration of the present disclosure, the electrical connection of the plurality of battery arrays 300 may be facilitated. Even without providing a cable for electrically connecting the plurality of battery arrays 300, the electrical connection may be implemented by fastening the inter bus bar to the symmetrically configured bus bar frame assembly. As a result, the structure of the battery assembly may be simplified while improving the electrical expandability.

Referring to FIGS. 17 and 18, the first side wall 121 and the plurality of side walls 120 may be fastened, connected, coupled, or fixed through the bracket 130. In addition, the second side wall 122 and the plurality of side walls 120 may be fastened, connected, coupled, or fixed through the bracket 130. The third battery array 330 and the fourth battery array 340 may be electrically connected to the front bus bar frame assembly 530 and the rear bus bar frame assembly 540, respectively. In addition, the third battery array 330 and the fourth battery array 340 may be pressurized by the fixing bar 150.

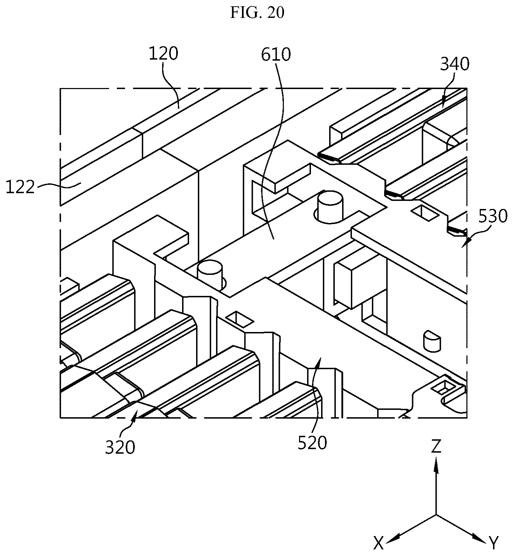

FIG. 20 is an enlarged drawing showing a part G of FIG. 18. Referring to FIGS. 18 and 20, the first inter bus bar 610 may electrically connect the first battery array 310 and the third battery array 330. Alternatively, the first inter bus bar 610 may electrically connect the rear bus bar frame assembly 520 and the front bus bar frame assembly 530.

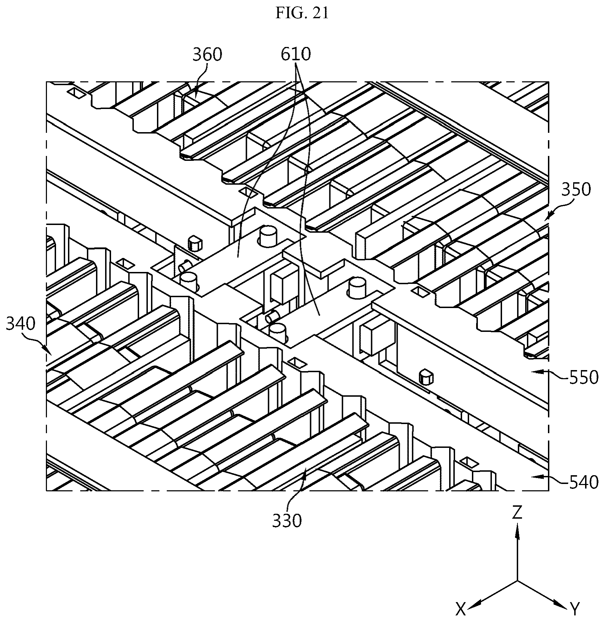

FIG. 21 is an enlarged drawing showing a part H of FIG. 18. Referring to FIGS. 18 and 21, the battery assembly according to an embodiment of the present disclosure may include a fifth battery array 350 and a sixth battery array 360. The fifth battery array 350 and the sixth battery array 360 may have substantially the same configurations as the third battery array 330 and the fourth battery array 340.

The fifth battery array 350 may be positioned at the rear side of the third battery array 330. The sixth battery array 360 may be positioned at the rear side of the fourth battery array 340.

The front bus bar frame assembly 550 may be electrically connected to the front side of the fifth battery array 350. The front bus bar frame assembly 550 may be electrically connected to the front side of the sixth battery array 360. The front bus bar frame assembly 530 may have substantially the same configuration and structure as the rear bus bar frame assembly 540. The front bus bar frame assembly 550 and the rear bus bar frame assembly 540 may be arranged to face each other.

The first inter bus bar 610 may be provided in plurality. The first inter bus bar 610 may electrically connect the fifth battery array 350 and the third battery array 330. Alternatively, the first inter bus bar 610 may electrically connect the rear bus bar frame assembly 540 and the front bus bar frame assembly 550.

Also, the first inter bus bar 610 may electrically connect the sixth battery array 360 and the fourth battery array 340.

The fifth battery array 350 and the sixth battery array 360 may be electrically connected to the front bus bar frame assembly 550 and the rear bus bar frame assembly 560, respectively. Also, the third battery array 330 and the fourth battery array 340 may be pressurized by the fixing bar 150.

In addition, the third battery array 330 and the fourth battery array 340 may be pressurized by the fixing bar 150.

The first battery array 310, the third battery array 330, and the fifth battery array 350 may be electrically connected. Also, the second battery array 320, the fourth battery array 340, and the sixth battery array 360 may be electrically connected.

According to this configuration of the present disclosure, the electrical connection of the plurality of battery arrays 300 may be facilitated. Even without providing a cable for electrically connecting the plurality of battery arrays 300, the electrical connection may be implemented by fastening the inter bus bar to the symmetrically configured bus bar frame assembly. As a result, the structure of the battery assembly may be simplified while improving the electrical expandability.

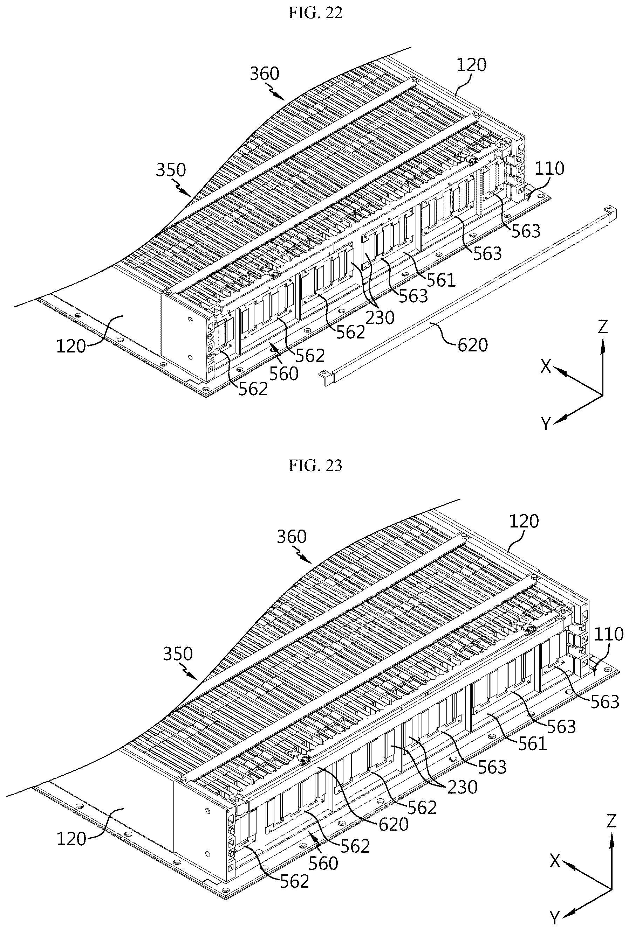

FIGS. 22 and 23 are drawings showing some components of the battery assembly of FIG. 18 and an inter bus bar. The second inter bus bar 620 may electrically connect the seventh bus bar 562 and the eighth bus bar 563. The seventh bus bar 562 and the eighth bus bar 563 may be installed on the rear bus bar frame 561. The first inter bus bar 610 may be elongated along the left and right direction or the Y-axis direction.

According to this configuration of the present disclosure, the first battery array 310, the third battery array 330, the fifth battery array 350, the sixth battery array 360, the fourth battery array 340, and the second battery array 320 may be electrically connected in that order.

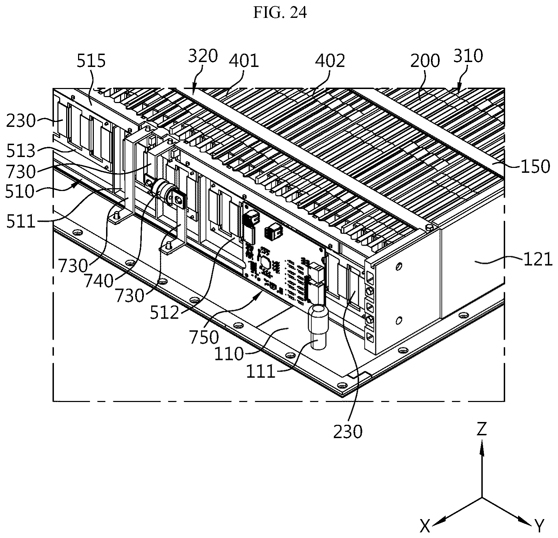

FIG. 24 is a drawing showing some components of the battery assembly of FIG. 23 and a terminal bus bar 730 and a control board 750. Referring to FIG. 24, the battery assembly according to an embodiment of the present disclosure may include a terminal bus bar 730. The terminal bus bar 730 may be electrically connected to the first bus bar 512 and the second bus bar 513, respectively. Also, the terminal bus bar 730 may include a fuse 740. Also, a control board 750 may be installed in the front bus bar frame assembly 510. The control board 750 may electrically control the battery array 300.

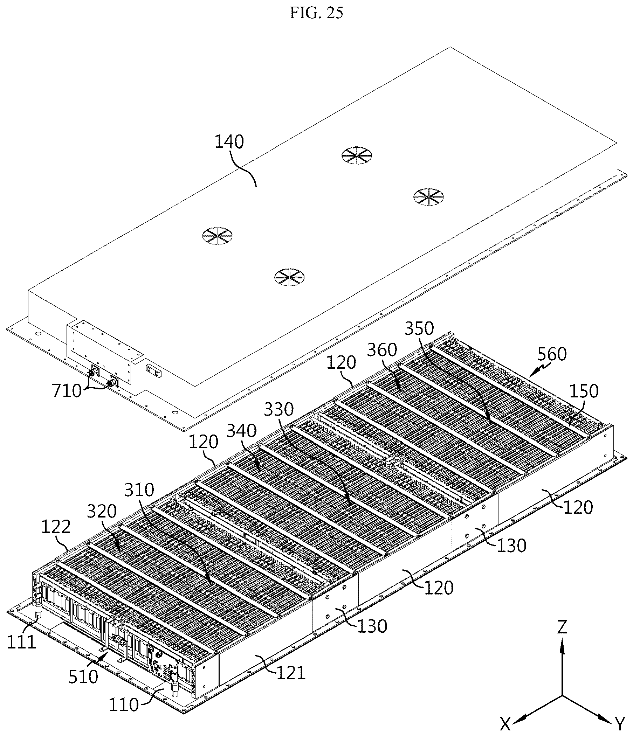

FIG. 25 is a drawing showing some components of the battery assembly of FIG. 24 and a top cover 140. Referring to FIG. 25, the battery assembly according to an embodiment of the invention may include a top cover 140. The top cover 140 may cover the upper surface of the first to sixth battery arrays 310 to 360. Also, the top cover 140 may cover the first side wall 121, the second side wall 122, and the side wall 120. In addition, the top cover 140 may have an output terminal 710 electrically connected to the terminal bus bar 730.

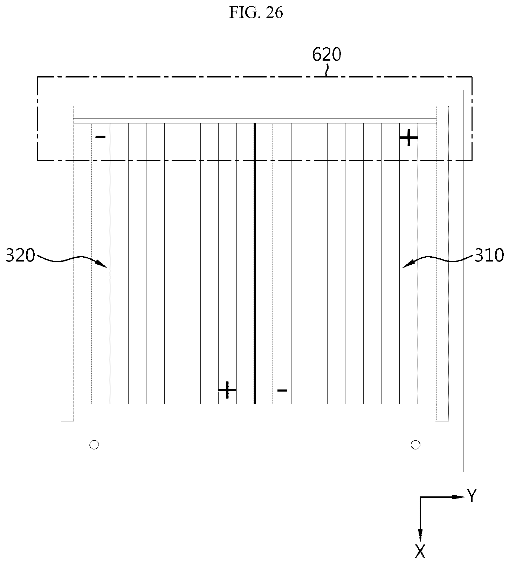

FIG. 26 is a drawing showing an example of the electrode connection of the first battery array 310 and the second battery array 320. Referring to FIG. 26, when the battery assembly includes the first battery array 310 and the second battery array 320, the rear side of the first battery array 310 and the rear side of the second battery array 320 may be electrically connected via the second inter bus bar 620.

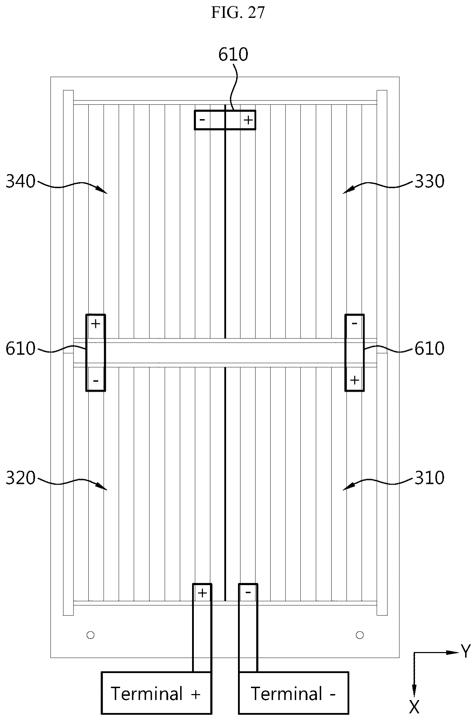

FIG. 27 is a drawing showing an example of the electrode connection of the first to fourth battery arrays 310 to 340. Referring to FIG. 27, when the battery assembly includes the first to fourth battery arrays 310 to 340, the rear side of the first battery array 310 and the front side of the third battery array 330 may be electrically connected via the first inter bus bar 610. In addition, the rear side of the third battery array 330 and the rear side of the fourth battery array 340 may be electrically connected via the first inter bus bar 610. In addition, the front side of the fourth battery array 340 and the rear side of the second battery array 320 may be electrically connected via the first inter bus bar 610.

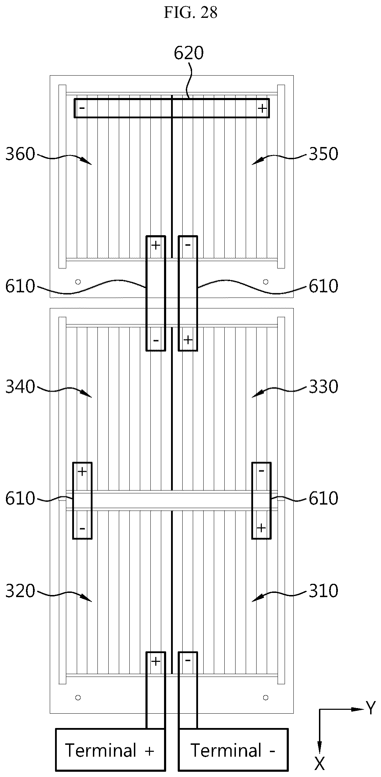

FIG. 28 is a drawing showing an example of the electrode connection of the first to sixth battery arrays 310 to 360. Referring to FIG. 28, when the battery assembly includes the first to sixth battery arrays 310 to 360, the rear side of the first battery array 310 and the front side of the third battery array 330 may be electrically connected via the first inter bus bar 610. In addition, the rear side of the third battery array 330 and the front side of the fifth battery array 350 may be electrically connected via the first inter bus bar 610. In addition, the rear side of the fifth battery array 350 and the rear side of the sixth battery array 360 may be electrically connected via the second inter bus bar 620. In addition, the front side of the sixth battery array 360 and the rear side of the fourth battery array 340 may be electrically connected via the first inter bus bar 610. In addition, the front side of the fourth battery array 340 and the rear side of the second battery array 320 may be electrically connected via the first inter bus bar 610.

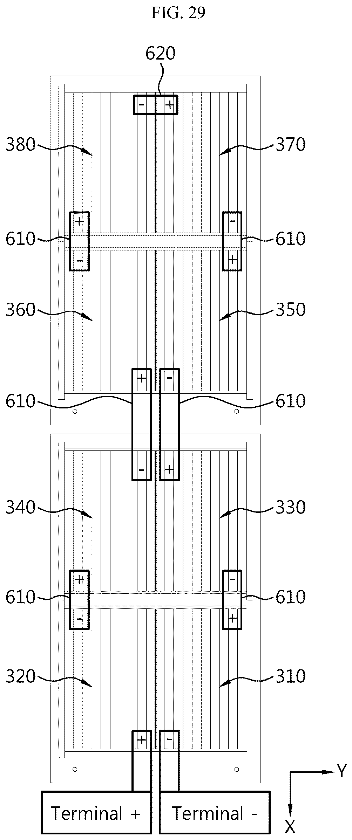

FIG. 29 is a drawing showing an example of the electrode connection of the first to eighth battery arrays 310 to 380. Referring to FIG. 29, when the battery assembly includes the first to eighth battery arrays 310 to 380, the rear side of the first battery array 310 and the front side of the third battery array 330 may be electrically connected via the first inter bus bar 610. In addition, the rear side of the third battery array 330 and the front side of the fifth battery array 350 may be electrically connected via the first inter bus bar 610. In addition, the rear side of the fifth battery array 350 and the front side of the seventh battery array 370 may be electrically connected via the first inter bus bar 610. In addition, the rear side of the seventh battery array 370 and the rear side of the eighth battery array 380 may be electrically connected via the first inter bus bar 610. In addition, the front side of the eighth battery array 380 and the rear side of the sixth battery array 360 may be electrically connected via the first inter bus bar 610. In addition, the front side of the sixth battery array 360 and the rear side of the fourth battery array 340 may be electrically connected via the first inter bus bar 610. In addition, the front side of the fourth battery array 340 and the rear side of the second battery array 320 may be electrically connected via the first inter bus bar 610.

The battery assembly of the present disclosure may mean a battery module or a battery pack depending on additional components and structures.

A battery rack according to the present disclosure may include the battery assembly. The battery rack may further include a rack frame for fixing, supporting, or installing a plurality of battery assemblies. In addition, the battery rack according to the present disclosure may include a BMS for controlling a plurality of battery assemblies. For example, one BMS may be provided for two battery racks.

A battery container according to the present disclosure may include the battery assembly according to the present disclosure. In addition, the battery container according to the present disclosure may include the battery rack according to the present disclosure. The battery rack may be provided in plurality. The battery container may include a container housing. The container housing may provide an accommodation space for accommodating the battery rack. In addition, the battery container may include a control unit for controlling a plurality of battery racks. In addition, the battery container may be configured to additionally include a sensor for detecting a state of the battery rack or a fire module for controlling a thermal event.

An energy storage system (ESS) according to the present disclosure may include the battery assembly according to the present disclosure. In addition, the energy storage system (ESS) according to the present disclosure may include the battery container according to the present disclosure. The energy storage system may include a plurality of battery containers. Also, the battery container may include a plurality of battery racks. The energy storage system may configure a link group by combining a certain number of battery containers and control containers. As an example, the control container may perform overall control or diagnosis of the battery container. In addition, the control container may include a DC part, an AC part, a BSC part, etc. to control the battery container. Meanwhile, each control container may be connected to a PCS.

The terms indicating directions such as upper, lower, left, right, front and rear may be used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a case providing an inner space;
a first battery array accommodated inside the case and including a plurality of battery cells stacked in a left and right direction;
a second battery array accommodated inside the case and including a plurality of battery cells stacked in the left and right direction, the second battery array being stacked with the first battery array in the left and right direction;
a first bus bar electrically connected to a front side of the first battery array and electrically insulated from the second battery array; and
a second bus bar electrically connected to a front side of the second battery array and electrically insulated from the first battery array.

2. The battery assembly according to claim 1,
wherein the number of battery cells in the first battery array is identical to the number of battery cells in the second battery array.

3. The battery assembly according to claim 1, further comprising:
a front bus bar frame extending in the left and right direction so that the first bus bar and the second bus bar are installed thereto.

4. The battery assembly according to claim 3,
wherein the case includes:
a base plate;
a first side wall coupled to an upper surface of the base plate and extending in a front and rear direction; and
a second side wall coupled to the upper surface of the base plate and extending in the front and rear direction, the second side wall being spaced apart from the first side wall,
wherein the first battery array and the second battery array are accommodated between the first side wall and the second side wall.

5. The battery assembly according to claim 3,
wherein the first side wall and the second side wall pressurize the first battery array and the second battery array.

6. The battery assembly according to claim 4,
wherein one side of the front bus bar frame is fastened to the first side wall.

7. The battery assembly according to claim 4, further comprising:
a fixing bar positioned above the first battery array and the second battery array and extending in the left and right direction, the fixing bar having one side coupled to the first side wall and the other side coupled to the second side wall.

8. The battery assembly according to claim 1, further comprising:
a third bus bar electrically connected to a rear side of the first battery array and electrically insulated from the second battery array; and
a fourth bus bar electrically connected to a rear side of the second battery array and electrically insulated from the first battery array.

9. The battery assembly according to claim 8, further comprising:
a third battery array positioned at the rear side of the first battery array and including a plurality of battery cells stacked in the left and right direction;
a fifth bus bar electrically connected to a front side of the third battery array; and
an inter bus bar configured to electrically connect the third bus bar and the fifth bus bar.

10. The battery assembly according to claim 8, further comprising:
a rear bus bar frame extending in the left and right direction so that the third bus bar and the fourth bus bar are installed thereto.

11. The battery assembly according to claim 1, further comprising:
a first insulation pad positioned between the first battery array and the second battery array.

12. The battery assembly according to claim 1,
wherein the first battery array further includes a second insulation pad positioned between the plurality of battery cells.

13. A battery rack comprising the battery assembly according to any one of claims 1 to 12.

14. An energy storage system comprising the battery assembly according to any one of claims 1 to 12.
